# EUROPÄISCHE PATENTSCHRIFT

(11) **EP 1 093 948 B1**
(45) Veröffentlichungstag und Bekanntmachung des Hinweises auf die Patenterteilung: **09.06.2004**
(21) Anmeldenummer: 00118927.3
(22) Anmeldetag: 01.09.2000
(51) Int. Cl.: B60J 5/04

(54) **Fahrzeugtür, insbesondere Kraftfahrzeugtür**
Vehicle door, in particular motor vehicle door
Porte de véhicule, en particulier porte de véhicule à moteur

(30) Priorität: 21.10.1999 DE 19950656
(43) Veröffentlichungstag der Anmeldung: 25.04.2001
(73) Patentinhaber: Dr.Ing. h.c.F. Porsche Aktiengesellschaft, 70435 Stuttgart (DE)
(72) Erfinder: Eck, Helmut, 71277 Rutesheim (DE); Gerber, Harald, 74399 Wahlheim (DE)

(56) Entgegenhaltungen:
- EP-A- 0 420 617
- EP-A- 0 811 516
- DE-C- 19 511 105
- US-A- 4 648 208
- US-A- 5 927 021

## Beschreibung

Die Erfindung betrifft eine Fahrzeugtür, insbesondere eine Kraftfahrzeugtür in Rahmenbauweise gemäß dem Oberbegriff des Anspruchs 1.

Aus der gattungsgemäßen DE 44 30 862 A1 ist eine Kraftfahrzeugtür in Rahmenbauweise bekannt, die sich aus einem unteren Türelement und einem aus Hohlprofilen gebildeten tragenden Türrahmen zusammensetzt, wobei der tragende Türrahmen einen oberen Fensterrahmen, ein etwa in Höhe der Fensterbrüstung verlaufendes horizontal ausgerichtetes Rahmenteil und einen unteren Rahmen zusammensetzt. Bei dieser Anordnung ist lediglich der Fensterheber zur Verstellung der Fensterscheibe an den vorgefertigten tragenden Türrahmen angebunden. Weitere Funktionselemente wie Lautsprecher, ein Türschloss, ein Türsteuergerät, eine Türhauptdichtung oder dgl. lassen sich mit dieser Konstruktion nicht an den tragenden Türrahmen anbinden.

Die EP 0 811 516 A2 zeigt eine in Schalenbauweise gefertigte Kraftfahrzeugtür, die sich aus einem Türaußenblech und einem Türinnenblech zusammensetzt. Beide Bauteile werden durch großflächige Blechpressteile gebildet, die durch Schweißen, Bördeln oder dgl. miteinander verbunden sind. Oberhalb der Türbrüstung bilden beide Blechpressteile einen Fensterrahmen, unterhalb der Türbrüstung einen hohlraumartigen Türkörper. Das Türinnenblech ist mit einem großen Ausschnitt versehen, der durch eine Trägerplatte dichtend verschließbar ist.

Aufgabe der Erfindung ist es, eine Kraftfahrzeugtür in Rahmenbauweise so weiterzuentwickeln, dass bei erhöhter Steifigkeit der Kraftfahrzeugtür insbesondere unterhalb der Fensterbrüstung eine Vielzahl von Funktionselementen mit dem tragenden Türrahmen zu einer vorgefertigten Baueinheit zusammenfassbar ist.

Gelöst wird diese Aufgabe durch die kennzeichnenden Merkmale des Anspruchs 1. Weitere, die Erfindung in vorteilhafter Weise ausgestaltende Merkmale enthalten die Unteransprüche.

Die mit der Erfindung hauptsächlich erzielten Vorteile sind darin zu sehen, dass durch die Anbindung eines großflächigen Montageträgerblechs an den tragenden Türrahmen eine Vielzahl von Funktionselementen in einfacher Weise und leicht zugänglich mit dem tragenden Türrahmen verbunden werden kann. So lassen sich ein Lautsprecher, insbesondere ein Tieftonlautsprecher, ein Fensterhebermotor, ein Türsteuergerät, ein Türschloss, sowie eine Türöffnungshilfe und eine Türzuziehhilfe in einfacher Weise am Montageträgerblech vormontieren. Durch das großflächige Montageträgerblech und dessen umfangseitige Anbindung an das untere Türelement wird die Kraftfahrzeugtür unterhalb der Türbrüstung wesentlich versteift. Ferner lässt sich mit einem derartigen Montageträgerblech die Türhauptdichtung türseitig anordnen, und zwar oberhalb der Fensterbrüstung am Fensterrahmen des tragenden Türrahmens und unterhalb der Fensterbrüstung an einer umlaufenden randseitigen Aufnahme des Montageträgerblechs. Ferner erfolgt durch das Montageträgerblech eine klare Trennung zwischen dem Nass- und Trockenbereich. Der Fensterhebermotor, das Türsteuergerät und der Hauptkabelstrang befinden sich im Trockenbereich.

Das Montageträgerblech lässt sich für Wartungszwecke schnell und einfach demontieren, um ein Ausbauen des Türschlosses, der Fensterscheibe und dgl. zu ermöglichen.

Ein Ausführungsbeispiel der Erfindung ist in der Zeichnung dargestellt und wird im folgenden näher erläutert.

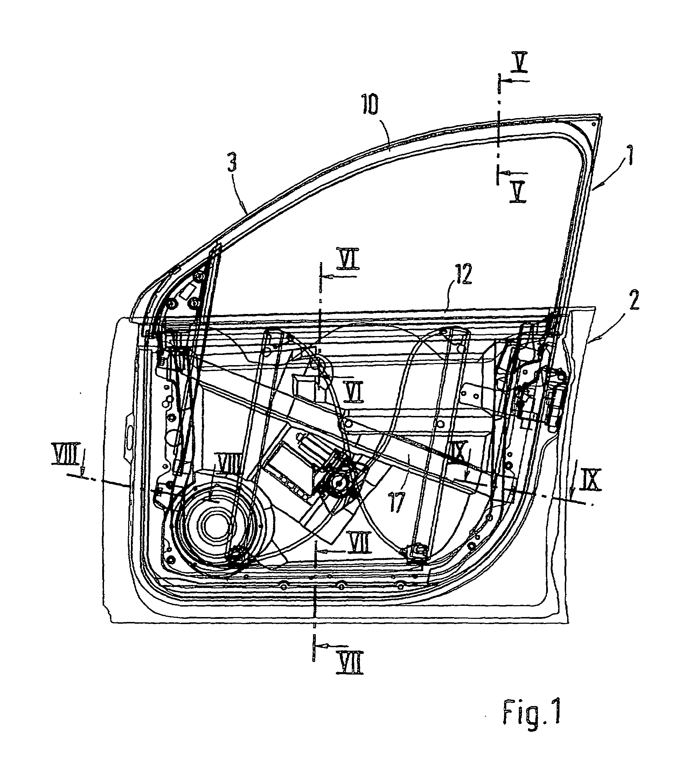

Es zeigen
- Fig. 1: eine Seitenansicht auf eine Kraftfahrzeugtür,

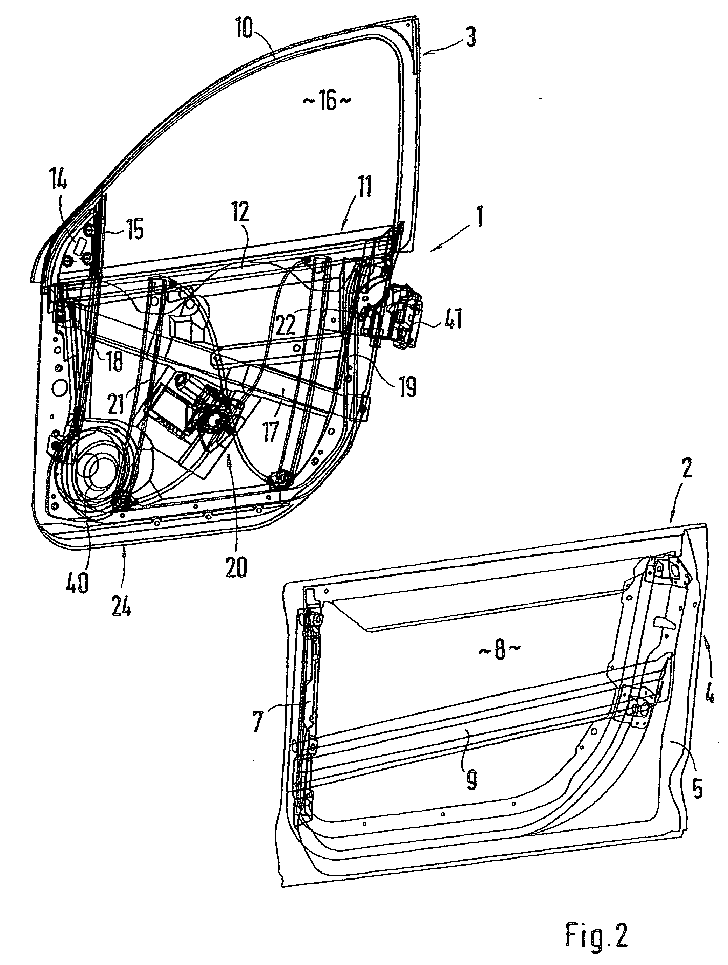

- Fig. 2: in schematischer Darstellung das untere Türelement und den tragenden Türrahmen vor dem Zusammenbau,

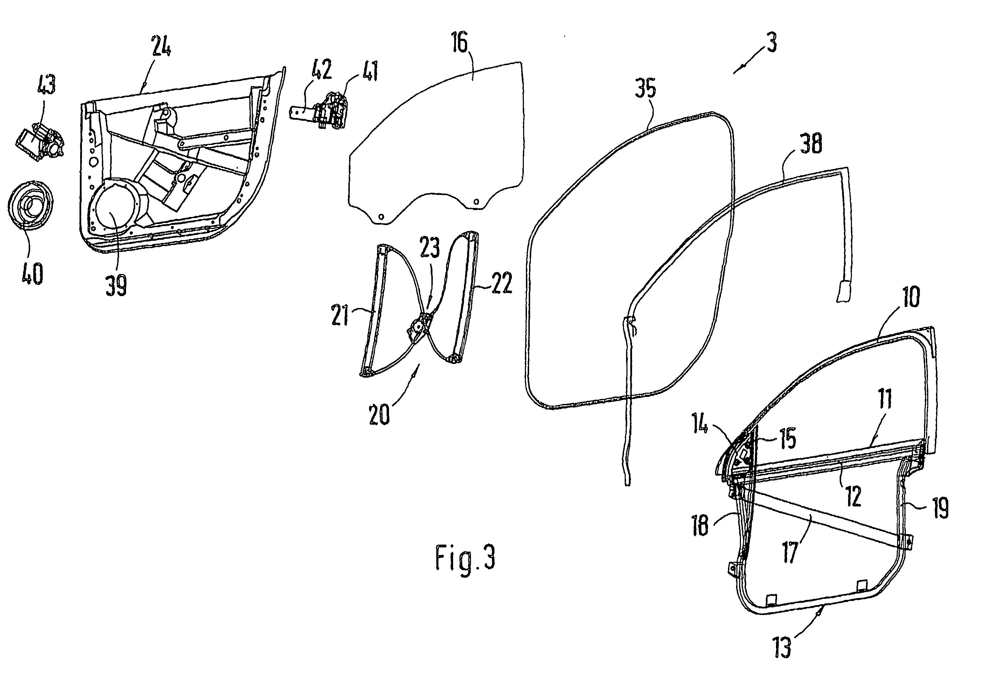

- Fig. 3: in schematischer Darstellung die wesentlichen Teile des tragenden Türrahmens, das großflächige Montageträgerblech und die am Türrahmen bzw. am Montageträgerblech aufgenommenen Funktionselemente,
- Fig. 4: in Explosionsdarstellung die Teile des unteren Türelements,
- Fig. 5: einen Schnitt nach der Linie V-V der Fig. 1 in größerer Darstellung,
- Fig. 6: einen Schnitt nach der Linie VI-VI der Fig. 1 in größerer Darstellung,
- Fig. 7: einen Schnitt nach der Linie VII-VII der Fig. 1 in größerer Darstellung,
- Fig. 8: einen Schnitt nach der Linie VIII-VIII der Fig. 1 in größerer Darstellung,

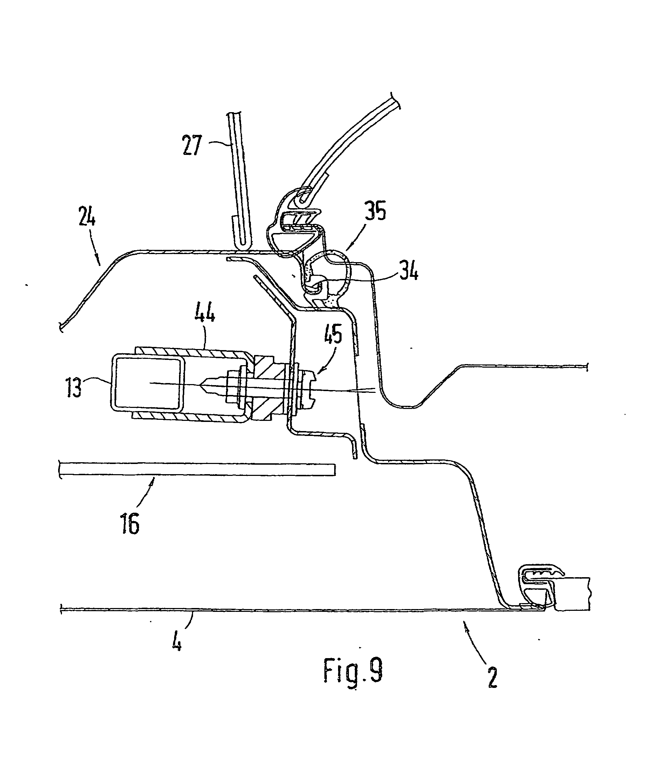

- Fig. 9: einen Schnitt nach der Linie IX-IX der Fig. 1 in größerer Darstellung.

Eine in Rahmenbauweise gefertigte Kraftfahrzeugtür 1 umfasst ein unteres Türelement 2 z.B. in Gestalt eines Türkastens und ferner einen aus Profilen zusammengesetzten tragenden Türrahmen 3.

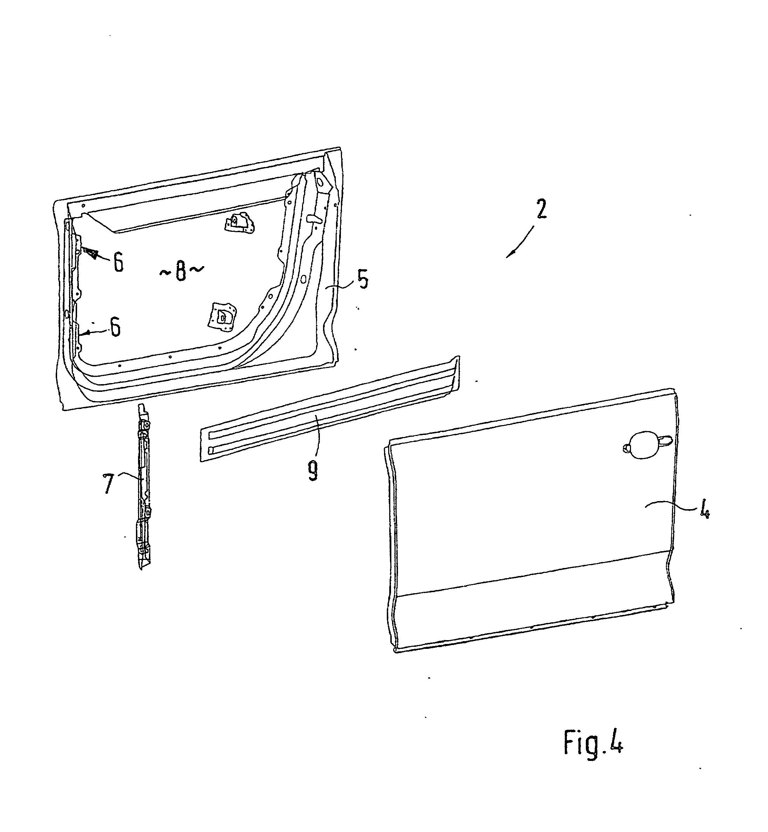

Das untere Türelement 2 setzt sich gemäß Fig. 4 aus einer Außenhaut 4 und einem inneren Rahmenteil 5 zusammen. Im Bereich von Scharnieren 6 ist das Türelement 2 mit einer aufrechten innenliegenden Scharnierverstärkung 7 versehen. Femer ist in einem Hohlraum 8 des unteren Türelements 2 ein profilierter langgestreckter Aufprallträger 9 vorgesehen, der an seinen beiden Enden an das innere Rahmenteil 5 angeschlossen und mit diesem verbunden ist. Das Rahmenteil 5 wird durch ein Blechpressteil gebildet.

Der tragende, aus Profilen zusammengesetzte Türrahmen 3 umfasst einen oberen, gebogenen Fensterrahmen 10, ein in Höhe der Fensterbrüstung 11 verlaufendes, etwa horizontal ausgerichtetes Rahmenteil 12 und einen etwa u-förmig ausgebildeten unteren Rahmen 13.

Ferner umfasst der Türrahmen 3 ein aufrechtes, ein Spiegeldreieck 14 in vertikaler Richtung begrenzendes Rahmenteil 15, das zugleich zur Führung einer Türfensterscheibe 16 dient. Das Rahmenteil 15 ist an den oberen Fensterrahmen 10 und den unteren Rahmen 13 angeschlossen. Darüber hinaus kann der Türrahmen 3 mit einer zur Versteifung dienenden Diagonalstrebe 17 versehen sein, die mit beiden aufrechten Schenkeln 18, 19 des unteren Rahmens 13 verbunden ist. Sämtliche Teile des tragenden Türrahmens 3 werden im Ausführungsbeispiel durch Strangprofilteile aus einer Leichtmetalllegierung gebildet, wobei die Strangprofilteile vorzugsweise zumindest einen geschlossenen Hohlprofilabschnitt aufweisen.

Die einzelnen Teile des tragenden Türrahmens 3 sind durch MIG-Schweißen miteinander verbunden.

Unterhalb des oberen Fensterrahmens 10 bzw. des horizontal ausgerichteten Rahmenteils 12 ist ein Fensterheber 20 mit Heber-Führungsschienen 21, 22 sowie einen Antrieb 23 zur Höhenverstellung der Türfensterscheibe 16 vorgesehen. Im Ausführungsbeispiel ist der Fensterheber 20 als Seilfensterheber ausgebildet.

Die beiden Heber-Führungsschienen 21, 22 sind mit ihren oberen Enden an das horizontal ausgerichtete Rahmenteil 12 und mit ihren unteren Enden an den unteren Rahmen 13 bzw. daran angeordnete Halter angebunden.

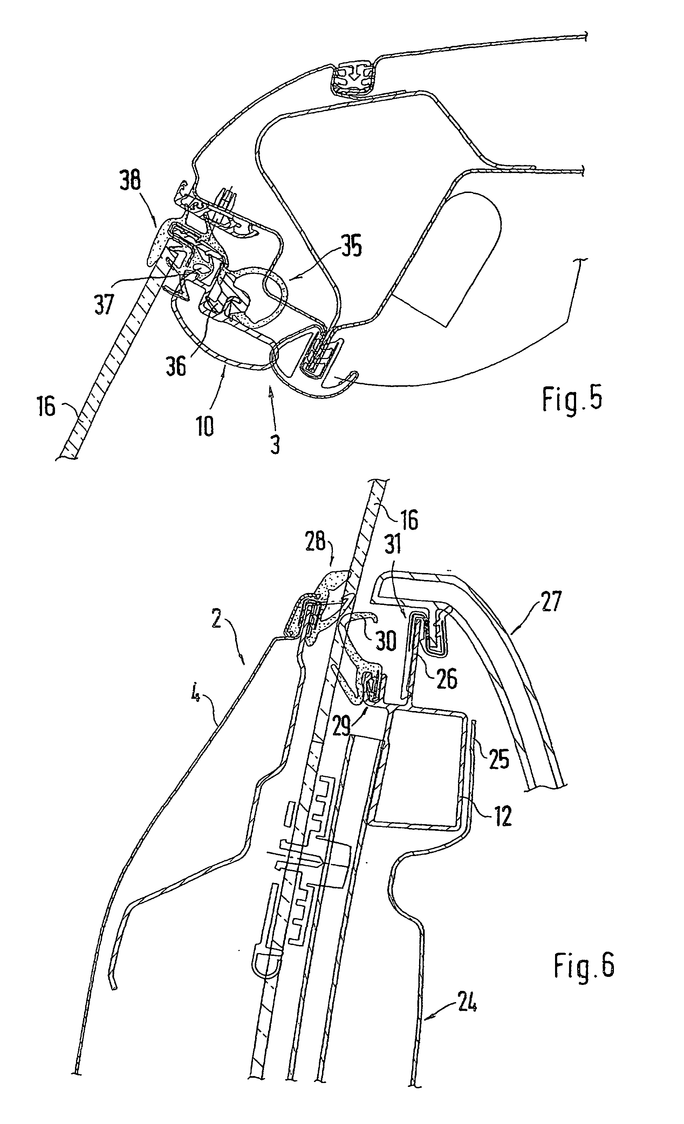

Erfindungsgemäß ist der unterhalb der Fensterbrüstung 11 liegende Bereich des tragenden Türrahmens 3 mit einem großflächigen, Funktionselemente aufnehmenden Montageträgerblech 24 versehen, das im oberen Randbereich mit dem etwa horizontal ausgerichteten Rahmenteil 12 des tragenden Türrahmens 3 örtlich durch Schrauben, Schweißen, Nieten oder dgl. verbunden ist. Hierzu ist ein oberer Endbereich 25 des Montageträgerblechs 24 an einen aufrechten Flansch des Rahmenteils 12 herangeführt (Fig. 6). Das Montageträgerblech 24 ist auf der einer Türinnenverkleidung 27 zugekehrten Seite der Kraftfahrzeugtür 1 vorgesehen.

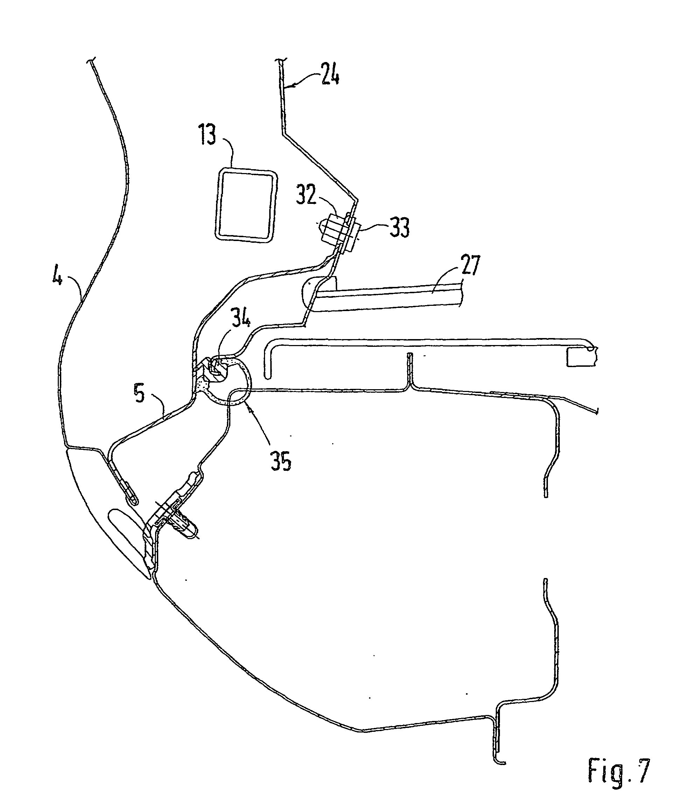

Eine äußere Türschachtabdichtung 28 ist auf den oberen Rand des unteren Türelements 2 aufgesetzt, wogegen am Rahmenteil 12 ein abgestellter u-förmiger Aufnahmeabschnitt 29 für eine innere Türschachtabdichtung 30 ausgebildet ist. Auf einen abgestellten Steg 26 des Rahmenteils 12 ist ein Halteprofil 31 zur Festlegung der Türinnenverkleidung 27 aufgesteckt. Im vorderen, hinteren und unteren Bereich übergreift das Montageträgerblech 24 den unteren Rahmen 13 bzw. das untere Türelement 2, wobei das Montageträgerblech 24 in diesen Bereichen mit dem Türelement 2 lösbar verbunden ist. Hierzu sind am inneren Rahmenteil 5 des unteren Türelementes 2 örtlich Gewindebuchsen 32, Muttern oder dgl. vorgesehen, in die Befestigungsschrauben 33 zum Festlegen des Montageträgerblechs 24 eindrehbar sind (Fig. 7).

Mit Ausnahme des oberen, horizontal ausgerichteten Randes ist am Montageträgerblech 24 randseitig eine umlaufende profilierte Aufnahme 34 ausgebildet, die unterhalb der Fensterbrüstung 11 die Türhauptdichtung 35 aufnimmt.

Ein Befestigungsabschnitt der Türhauptdichtung 35 ist in die u-förmige Aufnahme 34 eingesetzt bzw. umgreift den Randbereich des Montageträgerblechs 24.

Oberhalb der Fensterbrüstung 11 ist die Türhauptdichtung 35 an einer korrespondierenden Aufnahme 36 des oberen Fensterrahmens 10 des tragenden Türrahmens 3 aufgenommen (Fig. 5).

Die Türhauptdichtung 35 ist somit vollständig an der Kraftfahrzeugtür 1 angeordnet und weist durchgehend ein konstantes Profil ohne aufwendige angespritzte Formteile auf.

Am oberen Fensterrahmen 10 des tragenden Türrahmens 3 ist ferner eine weitere Aufnahme 37 ausgebildet, die eine mit der Türfensterscheibe 16 zusammenwirkende, äußere Türdichtung 38 aufnimmt.

Das großflächige, kuchenblechartige Montageträgerblech 24 weist im vorderen unteren Randbereich eine Aufnahmeöffnung 39 für einen Lautsprecher 40 auf, wobei im Ausführungsbeispiel ein Tieftonlautsprecher in die Aufnahmeöffnung 39 eingesetzt ist. Am hinteren oberen Randbereich des Montageträgerblechs 24 ist ein Türschloss 41 über einen Haltewinkel 42 am Montageblech 24 vormontiert.

Ferner ist ein Fensterhebermotor 43 des Fensterhebers 20 am Montageträgerblech 24 angeschraubt.

Darüber hinaus können - in nicht näher dargestellter Weise - eine Türöffnungshilfe und/oder eine Türzuziehhilfe und/oder ein Türsteuergerät und/oder ein Hauptkabelstrang am Montageträgerblech 24 befestigt werden.

Das Montageträgerblech 24 ist demontierbar mit den tragenden Türrahmen 3 verbunden und trägt wesentlich zur Versteifung der Kraftfahrzeugtür 1 bei.

Ferner wird durch das großflächige Montageträgerblech 24 eine Unterteilung der Kraftfahrzeugtür 1 in einen Nassbereich und einen Trockenbereich erzielt.

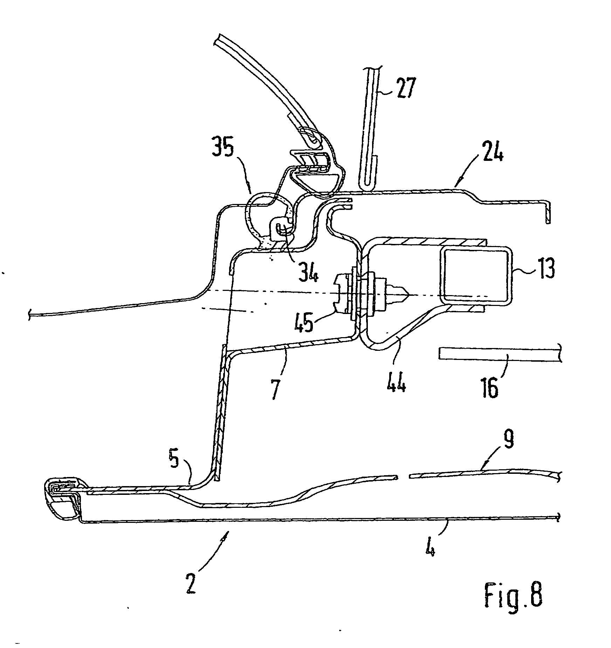

Zur Verbindung des tragenden Türrahmens 3 mit dem unteren Türelement 2 sind am unteren Rahmen 13 des Türrahmens 3 im vorderen und hinteren aufrechten Bereich jeweils zwei beabstandet angeordnete, u-förmige Konsolen 44 mit dem unteren Rahmen 13 verschweißt, wobei sich die Konsolen 44 jeweils zum angrenzenden Türelement 2 hin erstrecken und über Schraubverbindungen 45 einstellbar mit dem Türelement 2 verbunden sind (Fig. 8 u. 9).

Die Türinnenverkleidung 27 ist über nicht näher dargestellte Befestigungseinrichtungen am Montageträgerblech 24 festlegbar.

Im Ausführungsbeispiel weist die erfindungsgemäße Kraftfahrzeugtür 1 oberhalb der Fensterbrüstung 11 einen oberen Fensterrahmen 10 zur Führung der Türfensterscheibe 16 auf. Dieses Türsystem mit dem Montageträgerblech 24 kann jedoch selbstverständlich auch für eine Kraftfahrzeugtür Anwendung finden, die oberhalb der Fensterbrüstung 11 rahmenlos ausgebildet ist. Bei dieser Anordnung entfällt der obere Fensterrahmen 10.

## Patentansprüche

1. Fahrzeugtür, insbesondere Kraftfahrzeugtür (1) in Rahmenbauweise, die ein unteres Türelement (2) und einen aus Profilen gebildeten tragenden Türrahmen (3) umfasst, wobei der tragende Türrahmen (3) zumindest einen geschlossenen Hohlprofilabschnitt und wenigstens ein in Höhe der Fensterbrüstung (11) verlaufendes etwa horizontal ausgerichtetes Rahmenteil (12) und einen unteren Rahmen (13) aufweist, **dadurch gekennzeichnet, dass** der unterhalb der Fensterbrüstung (11) liegende Bereich des tragenden Türrahmens (3) mit einem großflächigen, Funktionselemente aufnehmenden Montageträgerblech (24) versehen ist, das einerseits zumindest mit dem etwa horizontal ausgerichteten Rahmenteil (12) des tragenden Türrahmens (3) und andererseits den unteren Rahmen (13) bzw. das untere Türelement (2) übergreifend mit dem unteren Türelement (2) verbunden ist und dass mit Ausnahme des oberen horizontal ausgerichteten Randes am Montageträgerblech (24) eine umlaufende profilierte Aufnahme (34) ausgebildet ist, die unterhalb der Fensterbrüstung (11) die Türhauptdichtung (35) aufnimmt.

2. Fahrzeugtür nach Anspruch 1, **dadurch gekennzeichnet, dass** ein oberer Endbereich (25) des Montageträgerblechs (24) an die Innenseite eines nach oben ragenden Flansches des horizontal ausgerichteten Rahmenteils (12) herangeführt ist und mit diesem durch Schrauben, Nieten, Schweißen oder dgl. verbunden ist.

3. Fahrzeugtür nach Anspruch 1, **dadurch gekennzeichnet, dass** das Montageträgerblech (24) mit Ausnahme seines oberen Randbereiches lösbar mit dem unteren Türelement (2) verbunden ist.

4. Fahrzeugtür nach Anspruch 1, **dadurch gekennzeichnet, dass** am inneren Rahmenteil (5) des unteren Türelementes (2) örtlich Gewindeaufnahmen (32), Muttern oder dgl. vorgesehen sind, in die Befestigungsschrauben (33) zum Festlegen des Montageträgerblechs (24) eindrehbar sind.

5. Fahrzeugtür nach Anspruch 5, **dadurch gekennzeichnet, dass** die Türhauptdichtung (35) oberhalb der Fensterbrüstung (11) am oberen Fensterrahmen (10) des tragenden Türrahmens (3) aufgenommen ist.

6. Fahrzeugtür nach einem der vorangegangenen Ansprüche, **dadurch gekennzeichnet, dass** das Montageträgerblech (24) zumindest eine Aufnahmeöffnung (39) für einen Lautsprecher (40) aufweist.

7. Fahrzeugtür nach einem der vorangegangenen Ansprüche, **dadurch gekennzeichnet**, das ein Türschloss (41) über einen Haltewinkel (42) am Montageträgerblech (24) vormontiert ist.

8. Fahrzeugtür nach einem der vorangegangenen Ansprüche, **dadurch gekennzeichnet, dass** ein Fensterhebermotor (43) des Fensterhebers (20) am Montageträgerblech (24) angeschraubt ist.

9. Fahrzeugtür nach einem der vorangegangenen Ansprüche, **dadurch gekennzeichnet, dass** eine Türöffnungshilfe und/oder eine Türzuziehhilfe und/oder ein Türsteuergerät am Montageträgerblech (24) befestigbar sind.

## Claims

1. A vehicle door, in particular a motor-vehicle door (1) in a frame design, which comprises a lower door element (2) and a supporting door frame (3) formed from profiled sections, wherein the supporting door frame (3) comprises at least one closed hollow profiled section and at least one frame part (12) extending at the level of the window sill (11) and orientated substantially horizontally and a lower frame (13), **characterized in that** the region of the supporting door frame (3) situated below the window sill (11) is provided with an assembly support plate (24) of large area which receives functional elements and which is connected on one side at least to the frame part (12) of the supporting door frame (3) orientated substantially horizontally and on the other side to the lower door element (2) while engaging over the lower frame (13) and the lower door element (2) respectively, and a continuous profiled receiving means (34), which receives the main seal (35) of the door below the window sill (11), is formed on the assembly support plate (24) with the exception of the upper edge orientated horizontally.

2. A vehicle door according to Claim 1, **characterized in that** an upper end region (25) of the assembly support plate (24) extends to the inside of an upwardly projecting flange of the frame part (12) orientated horizontally and it is connected to the said frame part (12) by bolts, rivets, welding or the like.

3. A vehicle door according to Claim 1, **characterized in that** the assembly support plate (24) is connected in a detachable manner to the lower door element (2) with the exception of its upper edge region.

4. A vehicle door according to Claim 1, **characterized in that** threaded receiving means (32), nuts or the like, into which fastening bolts (33) are capable of being screwed in order to fix the assembly support plate (24), are provided locally on the inner frame part (5) of the lower door element (2).

5. A vehicle door according to Claim 5 [*sic*], **characterized in that** the main seal (35) of the door is received above the window sill (11) on the upper window frame (10) of the supporting door frame (3).

6. A vehicle door according to one of the preceding Claims, **characterized in that** the assembly support plate (24) has at least one receiving opening (39) for a speaker (40).

7. A vehicle door according to one of the preceding Claims, **characterized in that** a door lock (41) is mounted beforehand on the assembly support plate (24) by way of a retaining angled member (42).

8. A vehicle door according to one of the preceding Claims, **characterized in that** a window-raising motor (43) of the window-raising means (20) is bolted onto the assembly support plate (24).

9. A vehicle door according to one of the preceding Claims, **characterized in that** a door-opening aid and/or a door-closing aid and/or a door-control device is or are capable of being fastened to the assembly support plate (24).

## Revendications

1. Porte de véhicule, en particulier porte de véhicule automobile (1) dans une construction à cadre, qui comprend un élément de porte inférieur (2) et un cadre de porte (3) porteur formé de profilés, le cadre de porte (3) porteur présentant au moins un tronçon de profilé creux fermé et au moins une partie de cadre (12) orientée à peu près horizontalement, s'étendant à hauteur de l'appui de fenêtre (11), ainsi qu'un cadre inférieur (13), **caractérisée en ce que** la zone du cadre de porte (3) porteur, située au-dessous de l'appui de fenêtre (11), est pourvue d'une tôle de support de montage (24) de grande surface recevant des éléments fonctionnels, laquelle est reliée d'une part au moins à la partie de cadre (12), orientée à peu près horizontalement, du cadre de porte (3) porteur et d'autre part à l'élément de porte inférieur (2), passant sur le cadre inférieur (13) ou l'élément de porte inférieur (2), et **en ce qu'**à l'exception du bord supérieur, orienté horizontalement, il est réalisé sur la tôle de support de montage (24) un logement (34) profilé périphérique qui reçoit la garniture d'étanchéité principale (35) de la porte, au-dessous de l'appui de fenêtre (11).

2. Porte de véhicule, selon la revendication 1, **caractérisée en ce qu'**une zone terminale supérieure (25) de la tôle de support de montage (24) est approchée du côté intérieur d'une bride, dirigée vers le haut, de la partie de cadre 12 orientée horizontalement, et est reliée à celle-ci par vissage, rivetage, soudage ou similaire.

3. Porte de véhicule selon la revendication 1, **caractérisée en ce qu'**à l'exception de sa zone de bordure supérieure, la tôle de support de montage (24) est reliée de manière séparable à l'élément de porte inférieur (2).

4. Porte de véhicule selon la revendication 1, **caractérisée en ce que** sur la partie de cadre intérieure (5) de l'élément de porte inférieur (2) sont prévus par endroits des logements taraudés (32), écrous ou similaires dans lesquels peuvent être vissées des vis de fixation (33) pour fixer la tôle de support de montage (24).

5. Porte de véhicule selon la revendication 5, **caractérisée en ce que** la garniture d'étanchéité principale (35) de la porte est reçue au-dessus de l'appui de fenêtre (11), sur le cadre de fenêtre supérieur (10) du cadre de porte (3) porteur.

6. Porte de véhicule selon l'une des revendications précédentes, **caractérisée en ce que** la tôle de support de montage (24) présente au moins une ouverture de réception (39) pour un haut-parleur (40).

7. Porte de véhicule selon l'une des revendications précédentes,
**caractérisée en ce qu'**une serrure de porte (41) est prémontée sur la tôle de support de montage (24), par une équerre de maintien (42).

8. Porte de véhicule selon l'une des revendications précédentes, **caractérisée en ce qu'**un moteur de lève-vitre (43) du lève-vitre (20) est vissé sur la tôle de support de montage (24).

9. Porte de véhicule selon l'une des revendications précédentes, **caractérisée en ce qu'**une aide à l'ouverture de porte et/ou une aide à la fermeture de porte et/ou un appareil de commande de porte peuvent être fixés à la tôle de support de montage (24).
